# EUROPEAN PATENT APPLICATION

(11) **EP 3 200 207 A1**
(43) Date of publication of application: **02.08.2017**
(21) Application number: 15844716.9
(22) Date of filing: 30.04.2015
(51) Int. Cl.: H01F 27/00

(54) **COMBINED ELECTRICAL APPLIANCE OF MULTIPLE SET OF CAPACITIVE SCREEN INSULATING CORE**

(30) Priority: 22.09.2014 CN 201410487095
(71) Applicant: Beijing Ruiheng Xinyuan Investment Co., Ltd, Huairou District, Beijing 101407 (CN)
(72) Inventor: WANG, Ruzhang, Beijing 101407 (CN)
(74) Representative: Petraz, Gilberto Luigi
(86) International application number: PCT/CN2015/077893
(87) International publication number: WO 2016/045385

(57) **Abstract**

The invention discloses a combined electric appliance with a multi-capacitive screen insulation core, which belongs to the field of high-voltage electric appliances and is applied to substations. The combined electric appliance is a multifunctional small combined electric appliance. The combined electric appliance is mainly characterized in that three groups of capacitive screens of a main capacitor C1, a low-voltage capacitor C2 and an anti-interference capacitor C3 are arranged in an insulation core of a high-voltage electric appliance such as a high-voltage bushing, a cable terminal head or the like simultaneously; a voltage display apparatus, an insulation monitor and a local discharge detector which meet accuracy requirements access a terminal led out of the low-voltage capacitor C2; and energy is extracted from the terminal as a power supply for the combined electric appliance. Meanwhile, a grounding part through which a conductor flows is sleeved with a current transformer, the insulation core of the bushing or the cable terminal head is sleeved with a plurality of annular zinc oxide valve plates of an arrester, wherein the head ends of the valve plates are connected with a terminal of the bushing or the cable head, and the tail ends of the valve plates are connected with a flange of the bushing or the cable head.

## Description

### TECHNICAL FIELD

A multifunctional combined electric appliance based on three groups of capacitive screens, which belongs to the field of high-voltage electric appliances and is applied to substations, has the functions of insulation monitoring, local discharge detection, automatic recording of arrester discharge and the like in addition to the functions as a high-voltage bushing, a cable terminal head, a current transformer, a voltage transformer and an arrester. The combined electric appliance is a multifunctional small combined electric appliance.

### BACKGROUND ART

A high-voltage electric appliance for a substation generally comprises a high-voltage bushing, a cable terminal head, a current transformer, a voltage transformer, an arrester and other high-voltage devices, in addition to a transformer, a circuit breaker and a disconnecting switch. But all the devices are mounted inside the substation independently. Each device is high in cost and occupies a large area. Therefore, a combined electric appliance has developed fast. Simple examples are a bushing type current transformer where a high-voltage bushing and an iron core coil are sleeved together and a current-voltage transformer (CVT) where a current transformer and a voltage transformer are combined into integration, both of which just have the functions of two devices that are assembled and reduce a part of area and space, rather than changing the structure of the combined devices. Then, GIS, i.e., a pipeline power transmission system charged with SF6 gas has developed, which reduces the occupied area and the space indeed, but is high in cost and affects the environment due to high toxicity after discharge of SF6 gas.

To reduce the cost and the occupied space as much as possible, other high-voltage electric appliances, except the transformer, the circuit breaker and the disconnecting switch, are integrated on an insulation core of the bushing and the cable terminal head to constitute a modular combined electric appliance in the present invention. The combined electric appliance has the functions of insulation monitoring, local discharge detection, recording of arrester actions and the like simultaneously and does not need an external power supply.

### SUMMARY OF THE INVENTION

The combined electric appliance is mainly characterized in that three groups of capacitive screens including a main capacitor C1, a low-voltage capacitor C2 and an anti-interference capacitor C3 are arranged in an insulation core of a high-voltage electric appliance such as a high-voltage bushing (including a bushing type current transformer), a cable terminal head or the like simultaneously, such that such high-voltage electric appliance further has the functions of a voltage transformer, an insulation monitor and a local discharge detector and also has a function of supplying power to a detector while achieving the function as a bushing or a cable terminal head. The combined electric appliance is further characterized in that the insulation core of the bushing or the cable terminal head is sleeved with a plurality of annular zinc oxide valve plates of an arrester, wherein the head ends of the valve plates are connected with a terminal of the bushing or the cable head, and the tail ends of the valve plates are connected with a flange of the bushing or the cable head.

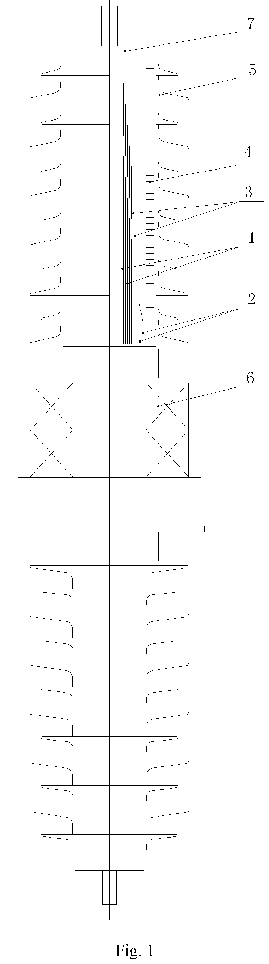

A structure and a manufacturing method of a combined electric appliance with a multi-capacitive screen insulation core will be described briefly with a bushing as an example, and a structural schematic drawing thereof refers to Fig. 1.

A coaxial capacitive screen type insulation core 7 (for example, an insulation core of a currently general capacitive type bushing) in which a plurality of insulation layers are wound and laid alternately with capacitive screens serves as main insulation, wherein capacitive screens are a group of coaxial cylindrical metal or semiconductor capacitive screens 1 each of which the diameter is gradually increased and the length is gradually reduced, which are referred to as a main capacitor C1 for short after being connected in series; a capacitive screen 2 that has great capacitances and is continuously wound or laid outside the last screen of the main capacitor C1 to extract a signal is referred to as a low-voltage capacitor C2 for short, which constitutes a capacitive voltage divider with C1; in order to prevent the interference of other electric appliances or electric conductors in a substation to C1 to affect the voltage division ratio of the capacitive voltage divider, a string of capacitive screens 3 that are insulated to each other and superposed to each other from a conductive screen to a grounding screen and are wound or laid from an electric terminal to the grounding screen end, while the main capacitor C1 and the low-voltage capacitor C2 are manufactured, are referred to as an anti-interference capacitor C3 for short. C1, C2 and C3 are embedded in the insulation core 7 and are arranged in sequence according to design requirements when the insulation core is manufactured. The insulation body 7 at one end of the bushing is sleeved and tightly pressed with annular zinc oxide valve plates 4 in sequence from a conductor to a grounding body, wherein the head ends of the valve plates 4 are connected with the conductor, and the tail ends of the valve plates 4 are connected with the grounding body through an automatic discharge recorder. A grounding part through which the conductor passes is sleeved with the iron core coil or the hollow coil 6 (the iron core coil may be used for an electromagnetic current transformer, and the hollow coil may be used for an electronic current transformer) to directly display a current amplitude, waveform and error. The zinc oxide valve plates are tightly wrapped with an outer sheath 5 made of silicone rubber. A voltage display apparatus accesses a terminal led out of C2 and may be used for displaying voltage amplitude, waveform and error. An insulation monitor and a local discharge detector may also access a terminal of C2. Energy can be extracted from the terminal as a power supply for the combined electric appliance.

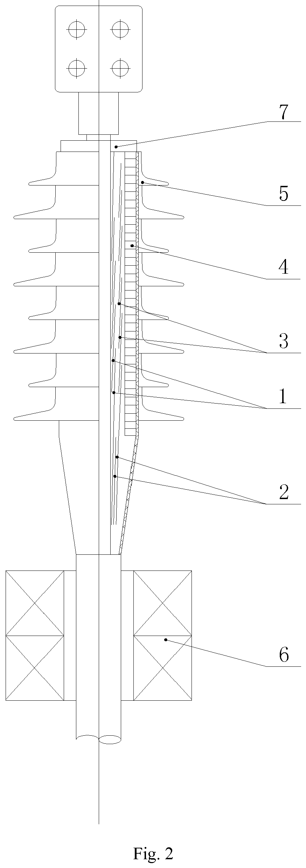

A structure and a manufacturing method of a combined electric appliance with a multi-capacitive screen insulation core will be described briefly with a cable terminal head as an example, and a structural schematic drawing thereof refers to Fig. 2.

Capacitive screens for the cable terminal head are a group of n metal or semiconductor capacitive screens 1 that are arranged inside an insulation body intermittently in an axial direction from a conductive end to a grounding end along an insulation surface of a cable body. Because the capacitive screens shift continuously from the conductor to the grounding part, the inner surface of a part, which faces to the conductor, of each capacitive screen inevitably generates a stray capacitor k to the conductor, and as known from an equivalent circuit diagram 3, the cylindrical capacitor Cn and the stray capacitor k to the conductor constitute a capacitor chain, and the total capacitor of the capacitor chain is referred to as the main capacitor C1. A group of capacitors that have great capacitances and are continuously wound or laid outside the last screen of the main capacitor C1 to extract a signal are referred to as a low-voltage capacitor C2 for short, which constitutes a capacitive voltage divider with C1. In order to prevent the interference of other electric appliances or electric conductors in a substation to C1 to affect the voltage division ratio of the capacitive voltage divider, a string of capacitive screens that are insulated to each other and superposed to each other from a conductor to a grounding screen and are wound or laid from an electric terminal to the grounding screen end, while the main capacitor C1 and the low-voltage capacitor C2 are manufactured, are referred to as an anti-interference capacitor C3 for short. C1, C2 and C3 are embedded in the insulation core and are arranged in sequence according to design requirements when the insulation core is manufactured. The insulation body is sleeved and tightly pressed with the annular zinc oxide valve plates 4 in sequence from a conductor to a grounding body, wherein the head ends of the valve plates 4 are connected with the conductor, and the tail ends of the valve plates 4 are connected with the grounding body; a grounding part through which the conductor passes is sleeved with the iron core coil or the hollow coil. The zinc oxide valve plates are tightly wrapped with an outer sheath 5 made of silicone rubber. Meanwhile, a voltage display apparatus (including amplitude, waveform and error), an insulation monitor and a local discharge detector access a terminal led out of C2. Energy can be extracted from the terminal as a power supply for the combined electric appliance.

C3 may not be arranged inside an insulation body of the bushing or the cable head in case of no requirement for preventing interference from an electric field, for example, without the need of measuring a voltage accurately.

Zinc oxide valve plates 4 may also not be arranged in the combined electric appliance in case of no requirement for arranging an arrester.

Different combined manners may be selected according to user's requirements.

The combined electric appliance with a multi-capacitive screen insulation core provided by the present invention comprises an insulation core, an arrester, and an iron core coil or a hollow coil. The combined electric appliance is characterized in that three groups of capacitive screens that are wrapped or laid with the insulation layer alternately include a main capacitor 1 (C1), a low-voltage capacitor 2 (C2) and an anti-interference capacitor 3 (C3) to constitute the insulation core 7, the insulation core 7 is tightly sleeved with a plurality of annular zinc oxide valve plates 4, an insulation outer sheath 5 is provided at the outmost layer, a voltage measuring apparatus, an insulation monitor and a local discharge detector access an outgoing line of C2, an action recorder accesses a grounding end of the arrester, and a current measuring apparatus accesses through the iron core coil or the hollow coil 6.

Compared with the prior art, the present invention has the following advantages:
1. The modular combined electric appliance with a multi-capacitive screen insulation core has multiple functions, reduces the occupied space and field installation, saves the construction investment, shortens the construction period, simplifies a structure of the substation and correspondingly reduces the accident rate.
2. Due to the arrangement of three groups of capacitive screens, the combined electric appliance based on the bushing or the cable terminal head has many new functions:
   a capacitive current flowing through the insulation body can be measured by accessing the insulation monitor to C2, so as to determine whether part of capacitive screens are broken down, such that the damage of insulation can be forecasted in advance to prevent a sudden power failure accident caused by device breakdown.

   A local discharge capacity inside the insulation core and high-voltage electric devices can be detected by accessing the local discharge detector to C2, which is conductive to finding an insulation defect at the early stage.
   In the presence of C2, energy can be extracted to supply power to a measuring instrument, such that an external power supply is omitted, and the combined electric appliance can be applied to places, such as countries and the wild where no power supply is provided, conveniently.
   The voltage waveform, amplitude and error may also be measured by C2.
   But the stray capacitor from other electric appliances and leads in the substation will affect the voltage division ratio of C1 to C2 and directly affects the voltage measurement accuracy, and thus the accuracy requirements to the voltage transformer cannot be reached. Therefore, the present invention discloses that a string of capacitive screens C3 are connected in series between the electric terminal of the bushing to the grounding terminal, such that a current of the stray capacitor flows through a flange along the string of capacitors and is then grounded, without affecting the voltage division ratio of C1 to C2. The interference of electric devices in the substation to C1 may be reduced to a lower level, such that the capacitive voltage divider consisting of C1 and C2 really satisfies the requirement on 0.2-scale accuracy.
3. The arrester is ingeniously combined with the insulation body of the bushing, such that the functions of the arrester and the insulation body can be accomplished simultaneously, electric devices can be saved, and the occupied space and land can be reduced.
4. Various electric components can be combined flexibly according to user's requirements.

### BRIEF DESCRIPTION OF THE DRAWINGS

Fig. 1 is a structural schematic drawing of the combined electric appliance with a multi-capacitive screen insulation core based on the bushing.
Fig. 2 is a structural schematic drawing of the combined electric appliance with a multi-capacitive screen insulation core based on the cable terminal head.

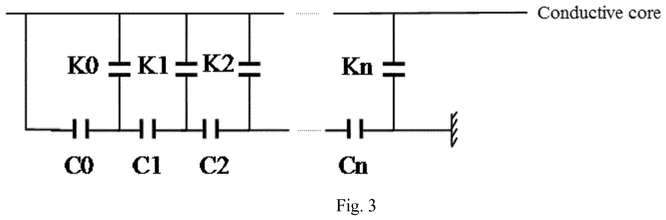

Fig. 3 is an equivalent circuit diagram of the cable terminal head.

### DETAILED DESCRIPTION OF PREFERRED EMBODIMENTS

1. A structure and a manufacturing method of a combined electric appliance with a multi-capacitive screen insulation core will be described briefly with a bushing as an example: a multi-layer coaxial capacitive screen type insulation core (for example, an insulation core of a currently general capacitive type bushing) in which insulation layers (for example, epoxy glass silk, polytetrafluoroethylene, polyethylene, oiled paper or the like) are wound and laid with capacitive screens (for example, aluminum foil, semiconductor materials or the like) alternately serves as main insulation C1, wherein capacitive screens thereof are a group of coaxial cylindrical metal or semiconductor capacitive screens each of which the diameter is gradually increased and the length is gradually reduced (the size of each screen is calculated by using a principle that capacitances among the screens are equal); a group of low-voltage capacitors C2 that have great capacitances are continuously wound or laid outside the last screen of C1 to extract a signal (for example, a main insulation material is still adopted, the capacitance of C2 is selected according to the requirement to the voltage division ratio, and the size and a connecting mode of polar plates of C2 are then calculated), which constitute a capacitive voltage divider with C1; a string of capacitive screens C3 (the insulation body and the capacitive screens thereof may be made of a material same as that of C1, and are set according to a size stipulated in design) that are insulated to each other and superposed to each other from a conductor to a grounding screen are wound or laid from an electric terminal to the grounding screen end, while the main capacitor C1 and the low-voltage capacitor C2 are manufactured.
   One side of the insulation body of the bushing is sleeved and tightly pressed with annular zinc oxide valve plates in sequence from a conductor to a grounding body, wherein the head ends of the valve plates are connected with the conductor, and the tail ends of the valve plates are connected with the grounding body through an automatic discharge recorder (which is placed on a place where the automatic discharge recorder is easily seen and easily replaced); a grounding part (for example, a part where the flange is arranged) through which the conductor passes is sleeved with the iron core coil or the hollow coil (the iron core coil may be used for an electromagnetic current transformer, and the hollow coil may be used for an electronic current transformer) to directly display a current amplitude, waveform and error. The zinc oxide valve plates are tightly wrapped with an outer sheath made of silicone rubber. Meanwhile, a voltage display apparatus (including amplitude, waveform and error), an insulation monitor and a local discharge detector may access a terminal led out of C2. Energy can be extracted from the terminal as a power supply for the combined electric appliance
2. A structure and a manufacturing method of a combined electric appliance with a multi-capacitive screen insulation core will be described briefly with a cable terminal head as an example: main capacitive screens C1 for the cable terminal head are a group of n cylindrical capacitive screens (for example, made of aluminum foil or semiconductor materials) that are arranged inside an insulation body (for example, epoxy glass silk, polytetrafluoroethylene, polyethylene or the like) intermittently in an axial direction from a conductive end to a grounding end along an insulation surface (for example, crosslinked polyethylene) of a cable body. Because this string of capacitive screens shift continuously from the conductor to the grounding part according to positions suggested in design, a low-voltage capacitor that has great capacitances and is continuously wound or laid outside the last screen of the main capacitor C1 is referred to as a low-voltage capacitor C2 for short (for example, a main insulation material is still adopted, the capacitance of C2 is selected according to the requirement to the voltage division ratio, and the size and a connecting mode of polar plates of C2 are then calculated), which constitutes a capacitive voltage divider with C1. In order to prevent the interference of other electric appliances or electric conductors in a substation to C1, a string of anti-interference capacitive screens C3 (the insulation body and the capacitive screens thereof may be made of a material same as that of C1, and are set according to a size stipulated in design) that are insulated to each other and superposed to each other from a conductor to a grounding screen and are wound or laid from an electric terminal to the grounding screen end, while C1 and C2 are manufactured.

The insulation core for the cable terminal head is sleeved and tightly pressed with annular zinc oxide valve plates in sequence from a conductor (a wiring terminal) to a grounding body, wherein the head ends of the valve plates are connected with the conductor, and the tail ends of the valve plates are connected with the grounding body through an automatic discharge recorder (which is placed on a place where the automatic discharge recorder is easily seen and easily replaced); a grounding part (for example, the root of the cable terminal head) through which the conductor passes is sleeved with the iron core coil or the hollow coil (the iron core coil may be used for an electromagnetic current transformer, and the hollow coil may be used for an electronic current transformer) to directly display a current amplitude, waveform and error. The zinc oxide valve plates are tightly wrapped with an outer sheath 5 made of silicone rubber. Meanwhile, a voltage display apparatus (including amplitude, waveform and error), an insulation monitor and a local discharge detector access a terminal led out of C2. Energy can be extracted from the terminal as a power supply for the combined electric appliance.

## Claims

1. A combined electric appliance with a multi-capacitive screen insulation core, comprising an insulation core (7), an arrester, and an iron core coil or a hollow coil, wherein three groups of capacitive screens that are wrapped or laid with an insulation layer alternately include a main capacitor C1, a low-voltage capacitor C2 and an anti-interference capacitor C3 to constitute the insulation core (7), the insulation core (7) is tightly sleeved with a plurality of annular zinc oxide valve plates (4), an insulation outer sheath (5) is provided at the outmost layer, a voltage measuring apparatus, an insulation monitor and a local discharge detector access an outgoing line of the low-voltage capacitor C2, an action recorder accesses a grounding end of the arrester, and a current measuring apparatus accesses through the iron core coil or the hollow coil (6);
with respect to an insulation body for a bushing, the main capacitor C1 thereof is composed of a group of coaxial cylindrical metal or semiconductor capacitive screens (1) each of which the diameter is gradually increased and the length is gradually reduced, the low-voltage capacitor C2 is a group of capacitive screens (2) that have great capacitances and are continuously wound or laid outside the last screen of the main capacitor C1, the anti-interference capacitor C2 is a string of capacitive screens (3) that are insulated to each other and superposed to each other from a conductive screen to a grounding screen and are wound or laid from an electric terminal to the grounding screen end, while the main capacitor C1 and the low-voltage capacitor C2 are manufactured, and the main capacitor C1, the low-voltage capacitor C2 and the anti-interference capacitor C3 are embedded in the insulation core (7) and are wound or laid in sequence;
with respect to an insulation core for a cable terminal head, the main capacitor C1 thereof is a group of n cylindrical capacitive screens (1) that are connected in series and are insulated to each other in an axial direction and superposed to each other from a conductive end to a grounding end along an insulation surface of a cable body, the low-voltage capacitor C2 is a capacitive screen (2) that has a great capacitance and is continuously wound or laid outside the last screen of the main capacitor C1, the anti-interference capacitor C3 is a string of capacitive screens (3) that are insulated to each other and superposed to each other from a conductive screen to a grounding screen and are wound or laid from an electric terminal to the grounding screen end, while the main capacitor C1 and the low-voltage capacitor C2 are manufactured, and the main capacitor C1, the low-voltage capacitor C2 and the anti-interference capacitor C3 are embedded in the insulation core (7) and are wound or laid in sequence.

2. The combined electric appliance with a multi-capacitive screen insulation core according to claim 1, wherein the insulation core (7) is not provided with the anti-interference capacitor C3.

3. The combined electric appliance with a multi-capacitive screen insulation core according to claim 1, wherein a plurality of annular zinc oxide valve plates (4) are not provided outside the insulation core (7).

4. The combined electric appliance with a multi-capacitive screen insulation core, comprising an insulation core (7) and an iron core coil or a hollow coil, wherein the insulation core (7) comprises a main capacitor C1 and a low-voltage capacitor C2 which are composed of two groups of capacitive screens that are alternately wrapped or laid with an insulation layer, the low-voltage capacitor C2 and the main capacitor C2 constitute a capacitive voltage divider, and an insulation outer sheath (5) is provided outside the insulation core (7); and a voltage measuring apparatus and/or an insulation monitor and/or a local discharge detector may selectively access an outgoing line of the low-voltage capacitor C2, and a current measuring apparatus may access through the iron core coil or the hollow coil (6).

5. The combined electric appliance with a multi-capacitive screen insulation core according to claim 4, wherein energy can be extracted from the outgoing line of the low-voltage capacitor C2 as a power supply for the combined electric appliance.

6. The combined electric appliance with a multi-capacitive screen insulation core according to claim 4, wherein the insulation core (7) further comprises an anti-interference capacitor C3 which is composed of a string of capacitive screens (3) that access in series from the electric terminal to the grounding screen.

7. The combined electric appliance with a multi-capacitive screen insulation core according to claim 4, further comprising an arrester, wherein the arrester comprises a plurality of annular zinc oxide valve plates (4) which are provided between the outside of the insulation core (7) and the insulation outer sheath (5).

8. The combined electric appliance with a multi-capacitive screen insulation core according to claim 7, wherein the insulation body (7) is sleeved and tightly pressed with the annular zinc oxide valve plates (4) in sequence from a conductor to a grounding body, the head ends of the valve plates (4) are connected with the conductor, and the tail ends of the valve plates (4) are connected with the grounding body through an automatic discharge recorder; a grounding part through which the conductor passes is sleeved with the iron core coil or the hollow coil (6) to directly display a current amplitude, waveform and error.

9. The combined electric appliance with a multi-capacitive screen insulation core according to claim 6, wherein the main capacitor C1 is composed of a group of coaxial cylindrical metal or semiconductor capacitive screens (1) each of which the diameter is gradually increased and the length is gradually reduced, the low-voltage capacitor C2 is a group of capacitive screens (2) that have great capacitances and are continuously wound or laid outside the last screen of the main capacitor C1, the anti-interference capacitor C2 is a string of capacitive screens (3) that are insulated to each other and superposed to each other from a conductive screen to a grounding screen and are wound or laid from an electric terminal to the grounding screen end, while the main capacitor C1 and the low-voltage capacitor C2 are manufactured, and the main capacitor C1, the low-voltage capacitor C2 and the anti-interference capacitor C3 are embedded in the insulation core (7) and are wound or laid in sequence.

10. The combined electric appliance with a multi-capacitive screen insulation core according to claim 6, wherein the main capacitor C1 thereof is a group of n cylindrical capacitive screens (1) that are connected in series and are insulated to each other in an axial direction and superposed to each other from a conductive end to a grounding end along an insulation surface of a cable body, the low-voltage capacitor C2 is a capacitive screen (2) that has a great capacitance and is continuously wound or laid outside the last screen of the main capacitor C1, the anti-interference capacitor C3 is a string of capacitive screens (3) that are insulated to each other and superposed to each other from a conductive screen to a grounding screen and are wound or laid from an electric terminal to the grounding screen end, while the main capacitor C1 and the low-voltage capacitor C2 are manufactured, and the main capacitor C1, the low-voltage capacitor C2 and the anti-interference capacitor C3 are embedded in the insulation core (7) and are wound or laid in sequence.
